# EUROPEAN PATENT SPECIFICATION

(11) **EP 2 333 167 B1**
(45) Date of publication and mention of the grant of the patent: **08.11.2017**
(21) Application number: 09015010.3
(22) Date of filing: 03.12.2009
(51) Int. Cl.: E03C 1/086, B29C 65/06, B29C 65/00, F16L 23/026, F16L 47/02

(54) **Connector with integral sleeve portion and pipe with such a connector**
Anschlussstück mit integraler Aussenhülse und Leitung mit dem Anschlussstück
Connecteur avec portion de manchon intégral et tuyau avec ce connecteur

(43) Date of publication of application: 15.06.2011
(73) Proprietor: TP Reflex Group S.p.A., 21040 Venegono Superiore (VA) (IT)
(72) Inventor: Macchi, Claudio, 21040 Venegono Inferiore (IT)
(74) Representative: Reposio, Giancarlo

(56) References cited:
- DE-A1-102006 017 170
- DE-U1- 8 905 907
- US-A- 5 558 375

## Description

The invention concerns a connector attachable to a pipe, routing water from a faucet of a water supply to a washing machine or a dishwasher, the connector comprising a central portion with a channel, configured for routing the water to the pipe, the connector further comprising a sleeve surrounding the central portion, wherein the sleeve is distanced to the central portion by a gap, which is configured to accommodate the pipe therein.

The invention also concerns a pipe with such a connector.

Related prior art is disclosed in DE 89 05 907 U1 and US 5,558,375A. As closest prior art DE 10 2006 017 170 A1 is seen.

Such connectors and pipes are part of the prior art. The connector is, when in use, attached to a pipe or an inlet hose through which water is led or routed to a washing machine or a dishwasher.

The connector itself is, when in use, connected to a faucet or a tap of a water supply. To achieve a watertight and easy-to-assemble connector, a protruding portion of the connector may be surrounded by a nut. The nut is configured such, that it is screwable on a thread of the faucet or the tap.

Further, the connector normally comprises a central portion with a channel there through. This channel also passes through the protrusion so that water may pass through the whole length of the connector. The connector and, consequently, also the channel, may be straight, i.e., along one line, or may be angled.

Between the protrusion of the connector and the faucet or tap, a gasket may be positioned. Normally a gasket, being a separate element from the connector, is provided. However, it is possible that a gasket is an integral part of the connector, although of different material.

When in use, the connector with its central portion is inserted in a pipe, such as a plastic pipe. The inner wall of the pipe is then positioned on the outside of the central portion of the connector position.

To avoid that, when water is routed under pressure through the connector and the pipe to the washing machine or the dishwasher, the pipe and the connector become separated from each other resulting in a leakage, the outer surface of at least the central portion is configured to be serrated.

The surface may be configured to comprise a sawtooth profile.

In practice, it has been noticed that the serration alone is not sufficient to avoid leakage if the connector and the pipe are filled with pressurized water.

To avoid leakage, a sleeve with a throughhole is, therefore, provided in the prior art. This sleeve is generally cylindrically configured and surrounds the outer surface of the wall of the pipe. The central portion of the connector is passed through the throughhole and into the pipe, so that the outer serrated surface of the central portion of the connector comes in contact with the inner surface of the wall of the pipe. When the central portion is pushed into the pipe, the material of the wall of the pipe is partially displaced away from a longitudinal axis of the pipe and, consequently, also the longitudinal axis of the connector. Due to the sleeve covering the outside of the plastic pipe, the pipe itself cannot expand considerably, so that a tighter connection between the pipe and the connector can be provided.

This state of the art solution has the drawback that at least three elements have to be utilized to achieve a leak-tight connection between the connector and the pipe, namely, the pipe, the sleeve and the straight connector, which are problematic to handle during the fitting process.

It is the object of the current invention to achieve cost reduction for a connector and a pipe with a connector when, at the same time, a leakage-tight and safe connection is provided.

The solution presented by the invention is characterized in that the sleeve measured from a distal surface on the side of the faucet, parallel to the longitudinal axis of the connector, to a tip portion, has a length shorter than the length of the central portion.

Due to this improvement, the connector itself avoids a bulging-out effect of the pipe, when the connector is inserted with its central part into the pipe. In addition to avoiding one separate element, the assembly process can be simplified. Further, during the assembly, only the connector has to be pushed on the pipe. Furthermore, an easy insertion of the connector into the pipe followed by a strong friction fit causing a leak-tight connection is the result.

Special embodiments are claimed in the dependent claims and are detailed in the following.

It is of advantage to configure the gap to be narrower at its closed side than its open side. Due to such a configuration, the friction fit between the connector and the plastic pipe becomes stronger the more the connector is pushed on the distal end of the pipe. The leak-tightness is thereby enhanced.

The leak-tightness is further enhanced when the gap is dimensioned such, that it is configured to clamp the wall of a pipe, when the central portion is inserted at least partially in the pipe, whereby the pipe is surrounded by the sleeve.

If the sleeve, measured from a distal surface on the side of the faucet, parallel to the longitudinal axis of a connector to a tip portion, has a length of about ½ to ¾, especially ²/3 of a length of the central portion, a very easy insertion of the connectors into the pipe followed by a strong friction fit causing a leak-tight connection, is the result.

Further, if the connector is a monolithic device comprising thermoplastic material, the connector can be produced at low cost.

The leak-tightness can be further enhanced, if the gasket is provided as an integral portion of the connector, preferably as a bi-injection molded element, which may comprise rubber.

The invention also concerns a pipe with such a connector, further characterized in that the distal end of the pipe on the side of the connector is welded to an end portion of the connector at the area of the gap, limiting the groove in an area of contact between the sleeve and the central portion. Due to this additional weld, the leak-tightness can be enhanced. Further, it can be avoided that the connector comes apart from the pipe after it has been assembled. Manipulating effects can, therefore, be avoided.

If the distal end of a pipe is spin-welded to the end portion of the groove to the connector, the welding seal between the wall of the pipe and the connector can be achieved in one single continuous process. The connector can be pushed and/or screwed on the pipe, whereby not necessarily a thread on either the pipe or the connector is provided so that at the end of the insertion of the pipe in the gap, the welding seal is achieved between the distal end of the pipe and the end portion of the connector.

The connection between the pipe and the connector is long-fasting, if a friction fit and a material bond in the gap between the pipe and the connector is provided.

In the following, the invention is specified by help of a drawing.

In Figure 1, a connector and a pipe in cross-section are shown in a so far not assembled position.

In Figure 2, the same two elements, after having being assembled together, are shown in cross-section.

Figure 3 discloses the same elements of Figures 1 and 2 in a front view, however in an assembled portion.

The figures illustrate one of the possible embodiments only in a schematic way. The figures are only intended to make a general comprehension of the invention possible.

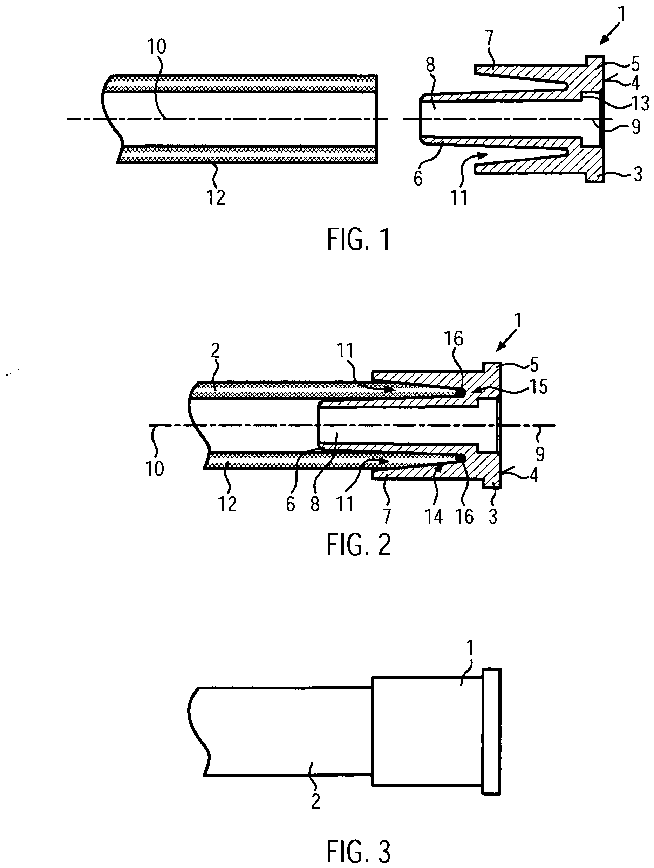

In Figure 1, a connector 1 according to a first embodiment of the invention is disclosed.

The connector 1 is attachable to a pipe 2. Water can be routed through the connector 1 and the pipe 2 to a washing machine or a dishwasher. To get water to either the washing machine or the dishwasher, the connector 1, with a protrusion 3 can be attached to a tap or a faucet of a water supply.

As the connector 1 is configured of a thermo-plastic material, a separate gasket has to be positioned between the first distal surface 4 of the connector 1 and the tap or the faucet. However, as an alternative, it is possible that the protrusion 3 is configured as a gasket 5 itself. The connector 1 comprises a central portion 6 and a sleeve 7. Through the central portion 6, a channel extends, which can be either straight or angled.

In the embodiment as shown in Figures 1 to 3, the channel 8 is straight, namely in line with a longitudinal axis 9 of the connector 1.

The longitudinal axis 9 is also the axis to which the connector 1 is rotationally symmetrical.

The longitudinal axis 9 is concentrically positioned to the longitudinal axis 10 of the pipe 2.

Between the central portion 6 and the sleeve 7, a gap 11 is provided. That gap narrows in the direction of the protrusion 3.

In the embodiment of Figure 1, the outer surface of the central portion 6 approaches the inner surface of the sleeve 7. Vice versa, also the inner surface of the sleeve 7 approaches the outer surface of the central portion 6.

The pipe 2 is configured as a tubing with a wall 12, of thermoplastic material. The material of the pipe 2 may be different to the material of the connector 1.

Further, another connector 1, with an integral gasket 5, may be produced by a bi-molding process. The gasket 5 may be manufactured of over-molded thermoplastic rubber.

Further, the channel 9 may provide a step 13 at which the diameter of the channel increases.

In Figures 2 and 3, the assembled connector 1 on the pipe 2 is displayed. It is discernible that after the assembly process, a distal end 14 is spin-welded to an end portion 15 of the connector 1 in an area of contact between the sleeve 7 and the central portion 6. In a welding area 16, a welding seam is provided. This welding seam inseparably combines the pipe 2 with the connector 1.

## Claims

1. Connector (1) attachable to a pipe (2) routing water from a faucet of a water supply to a washing machine or a dishwasher, the connector (1) comprising a central portion (6) with a channel (8), configured for routing the water to the pipe (2), the connector (1) further comprising a sleeve (7) surrounding the central portion (6) wherein the sleeve (7) is distanced to the central portion (6) by a gap (11) which is configured to accommodate the pipe (2) therein, wherein the sleeve (7) being an integral portion of the connector (1), **characterized in that** the sleeve (7) measured from a distal surface (4) on the side of the faucet, parallel to the longitudinal axis (9) of the connector (1), to a tip portion, has a length shorter than the length of the central portion (6).

2. Connector (1) according to claim 1, **characterized in** the gap (11) being narrower at its closed side than at its open side.

3. Connector (1) according to claim 1 or 2, **characterized in** the gap (11) being dimensioned such, that it is configured to clamp the wall (12) of the pipe (2), when the central portion (6) is inserted at least partially in the pipe (2), whereby the pipe (2) is surrounded by the sleeve (7).

4. Connector (1) according to one of the claims 1 to 3, **characterized in that** the sleeve (7) measured from a distal surface (4) on the side of the faucet, parallel to the longitudinal axis (9) of the connector (1), to a tip portion, has a length of about ½ to ¾ of the length of the central portion (6).

5. Connector (1) according to claim 1, **characterized in that** the length of the sleeve (7) is especially ²/3 of the length of the central portion (6).

6. Connector (1) according to one of the claims 1 to 5, **characterized in that** the connector (1) is a monolithic device, comprising thermoplastic material.

7. Connector (1) according to one of the claims 1 to 6, **characterized in that** a gasket (5) as an integral portion of the connector (1), is a bi-injection-molded element comprising rubber.

8. Pipe (2) with a connector (1) according to one of the foregoing claims, **characterized in that** the distal end (4) of the pipe (2) on the side of the connector (1) is welded to an end portion (15) of the connector (1), limiting the gap (11) in an area of contact between the sleeve (7) and the central portion (6).

9. Pipe (2) according to claim 8, **characterized in that** the distal end (14) of the pipe (2) is spin-welded to the end portion (15).

10. Pipe (2) according to claim 8 or 9, **characterized in that** a friction fit and a material bond in the gap (11) between the pipe (2) and the connector (1) is provided.

## Patentansprüche

1. Verbinder (1), der an eine Rohrleitung (2), die Wasser von einer Armatur einer Wasserversorgung zu einer Waschmaschine oder einem Geschirrspüler führt, anbringbar ist, wobei der Verbinder (1) einen zentralen Teil (6) mit einem Kanal (8) umfasst, der eingerichtet ist, Wasser in die Rohrleitung (2) zu führen, und der Verbinder (1) ferner eine Hülse (7) umfasst, die den zentralen Teil (6) umgibt, wobei die Hülse (7) durch eine Lücke (11), die eingerichtet ist, die Rohrleitung (2) darin zu beherbergen, von dem zentralen Teil (6) beabstandet ist, wobei die Hülse (7) ein integraler Teil des Verbinders (1) ist, **dadurch gekennzeichnet, dass** die Hülse (7) gemessen von der distalen Oberfläche (4) auf der Seite der Armatur parallel zur längsgerichteten Achse (9) des Verbinders (1) bis zu einem Bereich einer Spitze eine Länge aufweist, die kürzer als die Länge des zentralen Teils (6) ist.

2. Verbinder (1) nach Anspruch 1, **dadurch gekennzeichnet, dass** die Lücke (11) schmaler an ihrer geschlossenen Seite als an ihrer offenen Seite ist.

3. Verbinder (1) nach Anspruch 1 oder 2, **dadurch gekennzeichnet, dass** die Lücke (11) derart dimensioniert ist, dass sie eingerichtet ist, die Wand (12) der Rohrleitung (2) einzuklammern, wenn der zentrale Teil (6) zumindest teilweise in die Rohrleitung (2) eingeführt wird, wobei die Rohrleitung (2) umgeben von der Hülse (7) ist.

4. Verbinder (1) nach einem der Ansprüche 1 bis 3, **dadurch gekennzeichnet, dass** die Hülse (7), gemessen von der distalen Oberfläche (4) auf der Seite der Armatur parallel zu der längsgerichteten Achse (9) des Verbinders (1) bis zu einem Bereich einer Spitze eine Länge von etwa ½ bis ¾ der Länge des zentralen Teils (6) aufweist.

5. Verbinder (1) nach Anspruch 1, **dadurch gekennzeichnet, dass** die Länge der Hülse (7) insbesondere ²/₃ der Länge des zentralen Teils (6) aufweist.

6. Verbinder (1) nach einem der Ansprüche 1 bis 5, **dadurch gekennzeichnet, dass** der Verbinder (1) eine monolithische Vorrichtung ist, die ein thermoplastisches Material umfasst.

7. Verbinder (1) nach einem der Ansprüche 1 bis 6, **dadurch gekennzeichnet, dass** eine Dichtung (5) als integraler Teil des Verbinders (1) ein Zweikomponentenspritzgusselement, das Gummi umfasst, ist.

8. Rohrleitung (2) mit einem Verbinder (1) nach einem der vorhergehenden Ansprüche, **dadurch gekennzeichnet, dass** das distale Ende (4) der Rohrleitung (2) auf der Seite des Verbinders (1) mit einem Endteil (15) des Verbinders (1) verschweißt ist, das die Lücke (11) in einem Kontaktbereich zwischen der Hülse (7) und dem zentralen Teil (6) begrenzt.

9. Rohrleitung (2) nach Anspruch 8, **dadurch gekennzeichnet, dass** das distale Ende (14) der Rohrleitung (2) mit dem Endteil (15) rotationsverschweißt ist.

10. Rohrleitung (2) nach Anspruch 8 oder 9, **dadurch gekennzeichnet, dass** eine Friktionspassung und ein Materialverbund in der Lücke (11) zwischen der Rohrleitung (2) und dem Verbinder (1) bereitgestellt ist.

## Revendications

1. Raccord (1) fixable à un tuyau (2) acheminant de l'eau depuis un robinet d'une alimentation en eau jusqu'à une machine à laver ou un lave-vaisselle, le raccord (1) comprenant une portion centrale (6) avec un canal (8), configurée pour acheminer l'eau jusqu'au tuyau (2), le raccord (1) comprenant en outre un manchon (7) entourant la portion centrale (6) dans lequel le manchon (7) est éloigné de la portion centrale (6) par un écartement (11) qui est configuré pour loger le tuyau (2) à l'intérieur, dans lequel le manchon (7) est une portion d'un seul tenant du raccord (1), **caractérisé en ce que** le manchon (7) mesuré depuis une surface distale (4) sur le côté du robinet, parallèle à l'axe longitudinal (9) du raccord (1), jusqu'à une portion de bout, a une longueur plus courte que la longueur de la portion centrale (6).

2. Raccord (1) selon la revendication 1, **caractérisé en ce que** l'écartement (11) est plus étroit sur son côté fermé que sur son côté ouvert.

3. Raccord (1) selon la revendication 1 ou 2, **caractérisé en ce que** l'écartement (11) est dimensionné de façon à être configuré à serrer la paroi (12) du tuyau (2), lorsque la portion centrale (6) est insérée au moins partiellement dans le tuyau (2), moyennant quoi le tuyau (2) est entouré par le manchon (7).

4. Raccord (1) selon l'une des revendications 1 à 3, **caractérisé en ce que** le manchon (7) mesuré depuis une surface distale (4) sur le côté du robinet, parallèle à l'axe longitudinal (9) du raccord (1), jusqu'à une portion de bout, a une longueur d'environ ½ aux ¾ de la longueur de la portion centrale (6).

5. Raccord (1) selon la revendication 1, **caractérisé en ce que** la longueur du manchon (7) représente notamment les ²/₃ de la longueur de la portion centrale (6).

6. Raccord (1) selon l'une des revendications 1 à 5, **caractérisé en ce que** le raccord (1) est un dispositif monolithique, comprenant un matériau thermoplastique.

7. Raccord (1) selon l'une des revendications 1 à 6, **caractérisé en ce qu'**un joint d'étanchéité (5) en tant que portion d'un seul tenant du raccord (1), est un élément moulé par bi-injection comprenant du caoutchouc.

8. Tuyau (2) doté d'un raccord (1) selon l'une des revendications précédentes, **caractérisé en ce que** l'extrémité distale (4) du tuyau (2) sur le côté du raccord (1) est soudée à une portion d'extrémité (15) du raccord (1), limitant l'écartement (11) dans une zone de contact entre le manchon (7) et la portion centrale (6).

9. Tuyau (2) selon la revendication 8, **caractérisé en ce que** l'extrémité distale (14) du tuyau (2) est soudée par friction à la portion d'extrémité (15).

10. Tuyau (2) selon la revendication 8 ou 9, **caractérisé en ce qu'**un ajustement serré et une liaison de matériau dans l'écartement (11) entre le tuyau (2) et le raccord (1) sont prévus.
